(19) Europäisches Patentamt
European Patent Office
Office européen des brevets

(11) **EP 2 264 203 B1**

(12) **EUROPEAN PATENT SPECIFICATION**

(45) Date of publication and mention
of the grant of the patent:
**30.10.2019 Bulletin 2019/44**

(21) Application number: **09724095.6**

(22) Date of filing: **24.03.2009**

(51) Int Cl.:
$C22C\ 38/00\ ^{(2006.01)}$    $C22C\ 38/02\ ^{(2006.01)}$
$C22C\ 38/04\ ^{(2006.01)}$    $C22C\ 38/06\ ^{(2006.01)}$
$C22C\ 38/08\ ^{(2006.01)}$    $C22C\ 38/12\ ^{(2006.01)}$
$C22C\ 38/14\ ^{(2006.01)}$    $C22C\ 38/16\ ^{(2006.01)}$
$C22C\ 38/58\ ^{(2006.01)}$    $C22C\ 38/42\ ^{(2006.01)}$
$C22C\ 38/44\ ^{(2006.01)}$    $C22C\ 38/46\ ^{(2006.01)}$
$C22C\ 38/48\ ^{(2006.01)}$    $C22C\ 38/50\ ^{(2006.01)}$

(86) International application number:
**PCT/JP2009/055817**

(87) International publication number:
**WO 2009/119579 (01.10.2009 Gazette 2009/40)**

(54) **HIGH-STRENGTH UOE STEEL PIPE EXCELLENT IN DEFORMABILITY AND LOW-TEMPERATURE TOUGHNESS OF HEAT-AFFECTED ZONE**

HOCHFESTES UOE-STAHLROHR MIT HERVORRAGENDER VERFORMBARKEIT UND HERVORRAGENDER NIEDERTEMPERATURFESTIGKEIT DER SCHWEISSHITZEBEEINTRÄCHTIGTEN ZONE

TUYAU D'ACIER UOE À HAUTE RÉSISTANCE, AYANT UNE EXCELLENTE DÉFORMABILITÉ ET UNE  EXCELLENTE TÉNACITÉ À BASSE TEMPÉRATURE D'UNE ZONE AFFECTÉE PAR LA CHALEUR DE SOUDAGE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **26.03.2008 JP 2008081162**

(43) Date of publication of application:
**22.12.2010 Bulletin 2010/51**

(73) Proprietor: **Nippon Steel Corporation
Tokyo 100-8071 (JP)**

(72) Inventors:
• **TAKAHASHI, Nobuaki
Osaka-shi
Osaka 541-0041 (JP)**
• **YAMAMOTO, Akio
Osaka-shi
Osaka 541-0041 (JP)**
• **HAMADA, Masahiko
Osaka-shi
Osaka 541-0041 (JP)**

(74) Representative: **J A Kemp LLP
14 South Square
Gray's Inn
London WC1R 5JJ (GB)**

(56) References cited:
| | |
|---|---|
| EP-A1- 1 354 973 | EP-A1- 1 541 252 |
| WO-A1-2008/007737 | JP-A- 10 183 241 |
| JP-A- H09 201 688 | JP-A- H09 295 067 |
| JP-A- H09 296 253 | JP-A- 2000 355 729 |
| JP-A- 2000 355 729 | JP-A- 2004 143 556 |
| JP-A- 2005 226 110 | JP-A- 2006 291 348 |
| JP-A- 2006 299 415 | JP-A- 2007 327 136 |
| US-A- 4 210 445 | US-A- 4 219 371 |

**Description**

Technical Field

This invention relates to a UOE steel pipe. Specifically, this invention relates to a high-strength UOE steel pipe which has excellent deformability and excellent low-temperature toughness of its heat affected zone and which is suitable for use in pipelines constructed on permafrost in cold regions or in earthquake-prone regions.

Background Art

Increases in the strength of UOE steel pipes which make up pipelines are being promoted in order to meet increasing demands in recent years for cost reductions in pipelines. Fracture of long distance pipelines which carry natural gas or oil leads to serious accidents. Guaranteeing safety against fracture is of foremost importance when using high-strength UOE steel pipes in pipelines. Conventional pipeline has been designed by a stress-based design policy. Up to now, it was required that UOE steel pipes constituting pipelines satisfy the required strength and adequately resist the internal pressure of pipelines. There have been many reports at international conferences and the like of UOE steel pipes which satisfy the required high strength and also have adequate deformability in response to internal pressures.

In order to utilize even higher strength UOE steel pipes in pipelines, it is necessary to guarantee even higher safety against fracture than with conventional strength UOE steel pipes. In recent years, pipelines have come to be designed by a strain-based design policy which takes into consideration not only strength but also fracture deformability.

UOE steel pipes which constitute pipelines constructed on permafrost in cold regions such as Canada or in earthquake-prone regions (collectively referred to in this description as cold region pipelines) will be deformed in the longitudinal (axial) direction of a pipe as a result of up and down movements of the surface of the ground accompanying melting of permafrost or earthquakes. In general, earthquake resistance of pipelines means the pipe deformability in response to up and down movements of the surface of the ground. For the UOE steel pipes constituting cold region pipelines, it is important that (a) the maximum strength which is an indication of tensile properties be high, (b) the pipe body have excellent deformability as indicated by the yield-tensile ratio, uniform elongation, or the like, and (c) the heat affected zone have excellent low-temperature toughness, in order to increase their strength.

Up to now, UOE steel pipe having a high strength of API X80 grade or higher has not been used in cold region pipelines, and instead UOE steel pipe with a low strength of API X70 grade or lower has been used. The low-temperature toughness of the heat affected zone of this low strength UOE steel pipe can be guaranteed relatively easily because the pipe body does not need a high strength.

It is known that the earthquake resistance of a pipeline is affected not only by the dimensions of a UOE steel pipe but also by the yield-tensile ratio, uniform elongation, and the shape of the stress-strain curve thereof. For example, Patent Document 1 discloses an invention which increases earthquake resistance by specifying the microstructure of a UOE steel pipe. Patent Document 2 discloses an invention which increases earthquake resistance by specifying the rolling conditions and the microstructure of the material used to form a UOE steel pipe. Patent Document 3 discloses an invention which guarantees the earthquake resistance by specifying the microstructure of a UOE steel pipe and adequately guaranteeing uniform elongation which is specified by using parameters. The inventions disclosed in Patent Documents 1 - 3 have the object of improving only the tensile properties of a UOE steel pipe in order to improve earthquake resistance.

Patent Document 4 discloses a high-strength steel pipe with a low-temperature toughness which does not contain Mo or has a limited content of Mo.

Patent Document 5 discloses that an increase in the yield strength in the longitudinal direction of a steel pipe for pipelines can be suppressed by limiting the (Mo/Mn) ratio to greater than 0 and at most 0.08.

    Patent Document 1: JP H09-18405 A
    Patent Document 2: JP H11-343542 A
    Patent Document 3: JP 2003-293089 A
    Patent Document 4: JP 2007-327136 A
    Patent Document 5: JP 2007-314828 A

JP-H09-295067, US 4,210,445, JP 2000-355-729, JP-H09-201688, JP 2004-143556 and WO 2008/007737 disclose steels for pipes.

US 4,219,371 and JP 2007-327136 disclose steel compositions including B.

Disclosure of Invention

Problem Which the Invention is to Solve

The inventions disclosed in Patent Documents 1 - 3 do not give any consideration to guaranteeing the low-temperature toughness of the heat affected zone, which is demanded of UOE steel pipes constituting cold region pipelines. Based on these inventions, it is not possible to achieve both the high deformability (earthquake resistance) and the low-temperature toughness of the heat affected zone required of UOE steel pipes constituting cold region pipelines.

The invention disclosed in Patent Document 4 is, in brief, a steel pipe for pipelines which has improved toughness in the heat affected zone by containing W and by utilizing finely dispersed oxides. It does not increase pipe deformability, so a desired earthquake resistance cannot be obtained.

The invention disclosed in Patent Document 5 has a metallurgical structure comprising a mixture of bainite and martensite. Since it has a high tensile strength of at least 900 MPa, it cannot provide a desired earthquake resistance.

Means for Solving the Problem

As described above, the concept of earthquake resistance of a pipeline is established. However, the specific properties required for earthquake resistance vary depending upon the site of installation. Although various parameters for evaluating earthquake resistance are known, outside of Japan, the specific properties required for earthquake resistance of a pipeline have not been well established.

Under these circumstances, the present inventors focused on the yield-tensile ratio and specifically decreasing the yield-tensile ratio in the longitudinal direction of a UOE steel pipe as a parameter for evaluating earthquake resistance of linepipe.

Since permafrost occurs in extremely cold regions, the temperature at which toughness is evaluated should be -40°C. In strain-based design of a pipeline, in addition to earthquake resistance which is an important requirement, low-temperature toughness should also be taken into consideration in light of the environment which is far colder than the environment in which a typical pipeline is used. The present inventors set a target of a value of at most 85% for the yield-tensile ratio in the longitudinal direction and a value of at least 40 J at -40°C for the Charpy absorbed energy in the heat affected zone of a UOE steel pipe.

As a result of diligent investigation, the present inventors found that it is possible to decrease the yield-tensile ratio and to increase the low-temperature toughness of the heat affected zone of a UOE steel pipe by employing a composition in which the C content and the Nb content are suppressed and which basically does not contain V or Mo, whereby hardenability is increased and a mixed structure having a second hard phase is formed, and by adjusting the composition so as to have a decreased hardenability index. As a result, the above-described target can be achieved, and they completed the present invention.

The present invention is a UOE steel pipe characterized by having a steel composition consisting of, in mass percent, C: at least 0.03% and at most 0.07%, Si: at least 0.05% and at most 0.50%, Mn: at least 1.6% and at most 2.2%, P: at most 0.020%, S: at most 0.003%, Cu: at least 0.20% and at most 0.60%, Ni: at least 0.20% and at most 0.80%, Nb: at least 0.005% and at most 0.030%, Ti: at least 0.005% and at most 0.030%, N: at most 0.0070%, Al: at least 0.005% and at most 0.060%, Mo: at most 0.02%, V: at most 0.01%, Cr: at most 0.10%, and a remainder of Fe and impurities wherein, a hardenability index Pcm prescribed by Equation (1) is at most 0.22%, Cu + Cr + Ni is at least 0.4% and at most 1.5%, Nb + Mo + V is at most 0.05%, a yield strength is at least 480 MPa, a yield-tensile ratio is at most 85% in the longitudinal direction, and a Charpy absorbed energy in its heat affected zone at -40° C is at least 40 J, a metallurgical structure includes at least 80% by area of bainite, and a tensile strength in the longitudinal direction is at most 800 MPa.

$$\text{Hardenability index Pcm} = C + (Si/30) + (Ni/60) + (Mo/15) + \{(Cr + Mn + Cu)/20\} + (V/10) + 5B \qquad \dots \qquad (1)$$

Effects of the Invention

The present invention can provide a high-strength UOE steel pipe suitable for use as cold region pipeline due to the pipe having excellent deformability and low-temperature toughness of its heat affected zone.

Brief Explanation of the Drawings

Figure 1 is a graph showing the relationship between the C content and the toughness of a heat affected zone.
Figures 2(a) - 2(c) are graphs showing the change in the heat affected zone of a UOE steel pipe when the Nb content of a steel composition in the present invention was 0.018%, 0.023%, or 0.030%.
Figure 3 is a graph showing the results of an investigation of the influence on the toughness of the heat affected zone of a UOE steel pipe which provides a high strength of at least API X70 grade and contains 0.10% of Mo.

Embodiments of the Invention

Below, a UOE steel pipe according to the present invention will be explained with respect to its best mode.
The earthquake resistance of a pipeline can be increased by improving both the composition and the manufacturing method for a UOE steel pipe constituting a pipeline. The low-temperature toughness of the heat affected zone of a UOE steel pipe which is to be improved together with deformability according to the present invention is determined substantially entirely by the composition. The composition of a UOE steel pipe according to the present invention is determined taking into consideration the effect of each element on the low-temperature toughness of the heat affected zone at -40° C. Below, the reasons for limiting the composition will be explained.

C: At least 0.03% and at most 0.07%

C is an element which is effective for increasing strength. At least 0.03% of C is added in order to obtain a strength of at least API X70 grade.

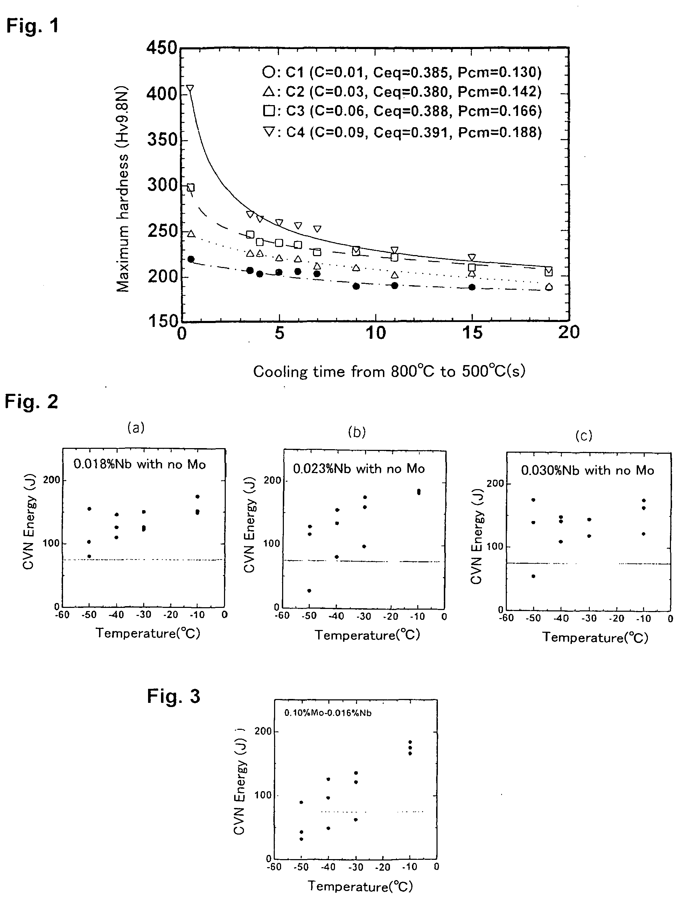

Figure 1 is a graph showing the relationship between the C content and the toughness of a heat affected zone. As shown in the graph of Figure 1, as the C content increases and particularly when it exceeds 0.07%, the hardness of the heat affected zone markedly increases, and at the same time, the toughness of the heat affected zone markedly decreases. Therefore, the C content is made at least 0.03% and at most 0.07%. The C content is preferably at least 0.03% and at most 0.06%.

Si: At least 0.05% and at most 0.50%

Si is effective as a deoxidizing agent and for increasing the strength of steel. Deoxidation is inadequate if the Si content is less than 0.05%. If the Si content exceeds 0.50%, a large amount of martensite-austenite constituent is formed in the heat affected zone, leading to a marked decrease in toughness and deterioration in the mechanical properties of a UOE steel pipe. Therefore, the Si content is made at least 0.05% and at most 0.50%. The Si content is preferably determined taking into consideration its balance with the plate thickness of a steel plate which is the starting material for a UOE steel pipe.

Mn: At least 1.6% and at most 2.2%

Mn serves to increase both the strength and the toughness of steel. In the present invention, because the C content is suppressed in order to guarantee the toughness of the heat affected zone, the Mn content is made at least 1.6% in order to guarantee strength. However, if the Mn content exceeds 2.2%, the toughness of the welds deteriorates. Therefore, the Mn content is made at least 1.6% and at most 2.2%. The Mn content is preferably at least 1.7% and at most 2.0%.

P: At most 0.020%

P is an element which undergoes marked segregation. The toughness of the base metal of a UOE steel pipe is worsened by segregation of P. Therefore, the P content is made at most 0.020%.

S: At most 0.003%

If S is present in steel, it forms MnS. If a large amount of MnS is present, there is the possibility of a marked deterioration in the toughness of the base metal of a UOE steel pipe. Therefore, the S content is made at most 0.003%.

Cu: At least 0.20% and at most 0.60%

Cu can increase the strength of steel without greatly worsening its toughness as a result of solid solution strengthening and a change in the structure due to its effect of increasing hardenability. A yield strength of at least 480 MPa in the longitudinal direction of a UOE steel pipe can be guaranteed by making the Cu content at least 0.20%. However, if the Cu content exceeds 0.60%, it becomes necessary to perform low-temperature heating of a slab in order to prevent the occurrence of Cu checking which causes surface defects in a slab, and doing so restricts manufacturing conditions. Therefore, the Cu content is made at least 0.20% and at most 0.60%.

Ni: At least 0.20% and at most 0.80%

In the same manner as Cu, Ni can achieve an increase in strength without greatly worsening toughness as a result of solid solution strengthening and a change in the structure due to its effect of increasing hardenability. Ni can also suppress a deterioration in the toughness of the base metal and the heat affected zone after hot bending. If the Ni content is at least 0.20%, a strength of at least 480 MPa in the longitudinal direction of a UOE steel pipe can be guaranteed. On the other hand, if the Ni content exceeds 0.80%, costs so increase that the practicality of the steel pipe is decreased. Therefore, the Ni content is made at least 0.20% and at most 0.80%.

Nb: At least 0.005% and at most 0.030%

Figures 2(a) - 2(c) are graphs showing the change in the heat affected zone of a UOE steel pipe when the Nb content in the steel composition according to the present invention was varied among 0.018%, 0.023%, and 0.030%.
As is clear from Figures 2(a) - 2(c), the toughness at -40° C can be guaranteed by making the Nb content at most 0.030%, so the Nb content is made at most 0.030%.
In the present invention, the reasons why the Nb content is suppressed to at most 0.030% are because (i) Nb in solid solution is thought to cause a deterioration in the toughness of the heat affected zone due to an increased hardenability which brings about an increase in the strength of the heat affected zone, and (ii) Nb increases the yield-tensile ratio which is defined as the ratio of yield strength/tensile strength since it is effective as a precipitation strengthening element and increases yield strength by precipitation strengthening. Therefore, in the present invention which has the object of decreasing the yield-tensile ratio, the Nb content is suppressed. However, when solid solution strengthening by Nb is not employed at all, and specifically when the Nb content is less than 0.005%, it is difficult to guarantee a high strength of at least API X70 grade.
Thus, Nb provides the effect of solid solution strengthening if its content is at least 0.005%, but if Nb is added in excess of 0.030%, it causes the toughness of the heat affected zone to deteriorate. Therefore, the Nb content is made at least 0.005% and at most 0.030%.

Ti: At least 0.005% and at most 0.030%

Ti increases toughness by forming TiN and thereby suppressing grain growth in the heat affected zone. At least 0.005% of Ti is added in order to obtain this effect. If the Ti content exceeds 0.030%, the content of dissolved N increases and the toughness of the heat affected zone deteriorates. Therefore, the Ti content is made at least 0.005% and at most 0.030%.

N: At most 0.0070%

N has the effect of increasing high temperature strength by forming nitrides with V, Ti, or the like. If the N content exceeds 0.0070%, it forms carbonitrides with Nb, V, and Ti, thereby bringing about a decrease in the toughness of the base metal and the heat affected zone. Therefore, the N content is made at most 0.0070%. When it is desired to further increase the toughness of the heat affected zone, the N content is preferably made at most 0.0050%.

Al: At least 0.005% and at most 0.060%

In the same manner as Si, Al acts as a deoxidizing agent when at least 0.005% is added. The effect of Al is adequately obtained when its content is up to 0.060%, but addition of Al in excess of this amount merely increases costs. Therefore, in the present invention, the Al content is made at least 0.005% and at most 0.060%.
The remainder other then the above-described elements is Fe and impurities.
In the present invention, examples of impurities include Mo and V. These impurities will be explained below.
Mo particularly affects the low-temperature toughness of the heat affected zone. Figure 3 is a graph showing the results of an investigation of the effect on the toughness of the heat affected zone of a UOE steel pipe when 0.10% of Mo is added in order to guarantee a high strength of at least API X70 grade.

As can be seen from a comparison of the results shown in Figure 3 and Figure 2(a) in which the Nb content is nearly the same, the addition of Mo causes the toughness of the heat affected zone to deteriorate. Therefore, in order to guarantee the toughness of the heat affected zone, it is preferable not to add Mo. However, Mo may be present in a minute amount which does not substantially worsen the low-temperature toughness of the heat affected zone, namely at most 0.02%.

V increases the yield strength and hence the yield-tensile ratio of the base is metal of a UOE steel pipe by precipitation strengthening, and it decreases the toughness of the heat affected zone by solid solution strengthening. Therefore, V is preferably not added. However, V may be present in a minute amount such that these problems essentially do not take place, namely at most 0.01%.

Cr: At most 0.10%

In the present invention, Cr is an optional element which may be added as necessary. In the same manner as Cu and Ni, it can increase strength without greatly worsening toughness as a result of solid solution strengthening and a change in the structure due to its effect of increasing hardenability. When Cr is added, its content is at most 0.10% in order to guarantee a low-temperature toughness at -40°C, which is the object of the present invention. In order to obtain the effect of Cr with certainty, the Cr content is at least 0.01%.

Hardenability index Pcm: At most 0.22%

The hardenability index Pcm is a typical index for evaluating weldability. Taking into consideration the toughness of the heat affected zone and girth (circumferential) weldability in the field, the hardenability index Pcm which is defined by

$$\text{Equation (1): Pcm} = C + (Si/30) + (Ni/60) + (Mo/15) + \{(Cr + Mn + Cu)/20\} + (V/10) + 5B$$

is preferably as low as possible. If the hardenability index Pcm exceeds 0.22%, girth weldability in the field generally deteriorates, so the hardenability index Pcm is made at most 0.22%.
(Cu + Cr + Ni): At least 0.4% and at most 1.5%
(Cu + Cr + Ni), which is the sum of the contents of Cu, Cr, and Ni, is made at least 0.4% in order to guarantee the strength of a UOE steel pipe. If (Cu + Cr + Ni) exceeds 1.5%, hardenability increases and the toughness of the heat affected zone deteriorates. Therefore, (Cu + Cr + Ni) is made at least 0.4% and at most 1.5%.
(Nb + Mo + V): At most 0.05%
(Nb + Mo + V), which is the sum of the contents of Nb, Mo, and V, is made at most 0.05% in order to guarantee the toughness of the heat affected zone of a UOE steel pipe.

A UOE steel pipe according to the present invention has the above-described steel composition.

Up to now, in order to obtain a low yield-tensile ratio of at most 85%, it was considered effective to add C, Mo, and Nb which are elements having high hardenability, and to form a mixed structure of ferrite with a hard structure such as MA (martensite-austenite constituent) as a second phase.

In contrast, according to the present invention, in view of the low-temperature toughness of the heat affected zone of a UOE steel pipe which deteriorates as the hardenability becomes too high, the C content, the Mo content, and the Nb content are suppressed, and the hardenability index Pcm is suppressed to a low level by taking the effect of Nb, V, and Mo into consideration. In addition, in the present invention, the content of elements other than these is selected such that a high strength of at least API X70 grade is obtained and such that the hardenability index Pcm is at most 0.22. As a result, the present invention has a bainite-based metallurgical structure, and specifically a metallurgical structure having at least 80% and preferably at least 90% by area of bainite.

In this manner, according to the present invention, a high-strength UOE steel pipe which is particularly suitable for use as cold region pipelines due to having excellent deformability and low-temperature toughness of its heat affected zone as indicated by "a yield strength of at least 480 MPa and a yield-tensile ratio of at most 85% in the longitudinal direction and a Charpy absorbed energy in the heat affected zone at -40° C of at least 40 J, and a tensile strength in the longitudinal direction of at most 800 MPa" is provided.

Example 1

The present invention will be explained more concretely while referring to examples.

Each of steel plates having the steel compositions (the remainder other than the elements shown in Table 1 was Fe and impurities, B was not added, and the content of B as an impurity was 0.0001%) and the values of hardenability index Pcm shown in Table 1 was formed into a cylindrical shape by UOE forming. The abutting portion was then welded by submerged arc welding with one pass on each of the inner surface and the outer surface to manufacture a UOE steel pipe having an outer diameter of 30 - 56 inches and a wall thickness of 20 - 38 mm. Welding was carried out under conditions controlled depending on the plate (wall) thickness such that the weld from the outer surface and the weld from the inner surface had an overlapping portion of at least 3 mm and at most 30 mm.

The mechanical properties of the base metal of these UOE steel pipes [the yield strength YS (MPa), the tensile strength TS (MPa), and the yield-tensile ratio YR (%)] and the absorbed energy at -40° C (J) (vE-40°C) in a Charpy impact test of the heat affected zone were measured. The measured results are also shown in Table 1.

The strength of the base metal was evaluated using an API strip test piece. The yield strength YS was the stress at an overall elongation of 0.5%. The Charpy impact test was conducted using a JIS No. 4 test piece with a 2-mm V-notch. The notch was provided such that the proportions in area of the weld and the heat affected zone was 50% and 50%, and six pieces were tested at -40° C. The lowest of their measured values was recorded.

EP 2 264 203 B1

Sample Nos. 1 - 5 in Table 1 were examples of the present invention which satisfied all the conditions prescribed

Table 1

| No. | C | Mn | S | Nb | Mo | V | Nb + Mo + V | Si | P | Cu | Cr | Ni | Cu + Cr + Ni | Ti | Al | N | Pcm | YS | TS | YR | Heat affected zone |
|---|---|---|---|---|---|---|---|---|---|---|---|---|---|---|---|---|---|---|---|---|---|
| | (wt%) | | (ppm) | (wt%) | | | | | | | | | | | | | (%) | (MPa) | (MPa) | (%) | |
| 1 | 0.05 | 1.9 | 4 | 0.02 | 0.01 | 0.01 | 0.04 | 0.15 | 0.012 | 0.3 | 0.01 | 0.65 | 0.96 | 0.015 | 0.037 | 0.003 | 0.2 | 567 | 676 | 83.9 | 78 |
| 2 | 0.06 | 1.85 | 9 | 0.023 | 0.01 | 0.01 | 0.043 | 0.15 | 0.013 | 0.28 | 0.01 | 0.61 | 0.9 | 0.014 | 0.033 | 0.004 | 0.19 | 555 | 682 | 81.4 | 89 |
| 3 | 0.05 | 1.95 | 12 | 0.015 | 0.01 | 0.01 | 0.035 | 0.12 | 0.01 | 0.3 | 0.01 | 0.3 | 0.61 | 0.015 | 0.03 | 0.004 | 0.18 | 542 | 653 | 78.6 | 103 |
| 4 | 0.05 | 1.65 | 18 | 0.02 | 0.01 | 0.01 | 0.04 | 0.18 | 0.015 | 0.25 | 0.01 | 0.3 | 0.56 | 0.015 | 0.03 | 0.004 | 0.17 | 481 | 589 | 81.7 | 92 |
| 5 | 0.05 | 1.72 | 5 | 0.02 | 0.01 | 0.01 | 0.04 | 0.15 | 0.015 | 0.23 | 0.1 | 0.43 | 0.76 | 0.015 | 0.032 | 0.004 | 0.18 | 492 | 584 | 84.2 | 89 |
| 6 | 0.05 | 1.9 | 5 | 0.04 | 0.01 | 0.01 | 0.06 | 0.15 | 0.015 | 0.3 | 0.01 | 0.3 | 0.61 | 0.015 | 0.032 | 0.004 | 0.18 | 552 | 638 | 86.5 | 34 |
| 7 | 0.05 | 1.9 | 5 | 0.02 | 0.2 | 0.01 | 0.23 | 0.15 | 0.015 | 0.3 | 0.01 | 0.3 | 0.61 | 0.015 | 0.032 | 0.004 | 0.18 | 562 | 705 | 79.7 | 29 |
| 8 | 0.05 | 1.9 | 5 | 0.02 | 0.01 | 0.05 | 0.08 | 0.15 | 0.015 | 0.3 | 0.01 | 0.3 | 0.61 | 0.015 | 0.032 | 0.004 | 0.18 | 587 | 629 | 93.3 | 39 |
| 9 | 0.06 | 1.75 | 12 | 0.02 | 0.01 | 0.01 | 0.04 | 0.15 | | 0.25 | 0.35 | 0.2 | 0.8 | 0.015 | 0.03 | 0.004 | 0.19 | 592 | 698 | 84.8 | 32 |
| 10 | 0.05 | 1.9 | 5 | 0.02 | 0.01 | 0.01 | 0.04 | 0.15 | 0.015 | 0.15 | 0.01 | 0.25 | 0.41 | 0.015 | 0.032 | 0.004 | 0.18 | 467 | 576 | 81.1 | 92 |
| T | | | | | | | 0.05 | | | | | | 0.4 – 1.5 | | | | | >480 | | <85.0 | >40 |

by the present invention. Sample Nos. 1 - 5 each had mechanical properties in the form of a yield strength of at least 480 MPa and a yield-tensile ratio of at most 85% both in the longitudinal direction and a Charpy absorbed energy of the heat affected zone at -400°C of at least 40 J. Thus, it can be seen that these samples were high-strength UOE steel pipes having excellent deformability and excellent low-temperature toughness of the heat affected zone.

In contrast, Sample No.6 was a comparative example in which the Nb content exceeded the upper limit prescribed by the present invention, Sample No.7 was a comparative example in which the Mo content exceeded the upper limit prescribed by the present invention, Sample No.8 was a comparative example in which the V content or (Nb + Mo + V) exceeded the range prescribed by the present invention, and Sample No.9 was a comparative example in which the Cr content was above the range prescribed by the present invention.

For each of Sample Nos. 6 - 9, the lowest value of the Charpy absorbed energy at -40°C of the heat affected zone was lower than the target value of 40 J. This is because the hardness of the heat affected zone increased as hardenability increased.

Sample No. 10 was a comparative example in which Cu fell below the lower limit of the range prescribed in the present invention. Although the toughness of the heat affected zone was good, the yield strength in the longitudinal direction was below the target value of 480 MPa. In the present invention, the C content and the Nb content are suppressed to low levels and there is basically no addition of Mo and V. Thus, strength is guaranteed by other elements. From the results for Sample No. 10, it can be seen that the target strength cannot be guaranteed if Cu or (Cu + Cr + Ni) is below the range prescribed by the present invention.

## Claims

1. A UOE steel pipe **characterized by** having a steel composition consisting of, in mass percent, C: at least 0.03% and at most 0.07%, Si: at least 0.05% and at most 0.50%, Mn: at least 1.6% and at most 2.2%, P: at most 0.020%, S: at most 0.003%, Cu: at least 0.20% and at most 0.60%, Ni: at least 0.20% and at most 0.80%, Nb: at least 0.005% and at most 0.030%, Ti: at least 0.005% and at most 0.030%, N: at most 0.0070%, Al: at least 0.005% and at most 0.060%, Mo: at most 0.02%, V: at most 0.01%, Cr: at most 0.10%, and a remainder of Fe and impurities wherein, a hardenability index Pcm prescribed by Equation (1) is at most 0.22%, Cu + Cr + Ni is at least 0.4% and at most 1.5%, Nb + Mo + V is at most 0.05%, a yield strength is at least 480 MPa, a yield-tensile ratio is at most 85% in the longitudinal direction, and a Charpy absorbed energy in its heat affected zone at -40° C is at least 40 J, a metallurgical structure includes at least 80% by area of bainite, and a tensile strength in the longitudinal direction is at most 800 MPa.

$$\text{Hardenability index Pcm} = C + (Si/30) + (Ni/60) + (Mo/15) + \{(Cr + Mn + Cu)/20\} + (V/10) + 5B \qquad \dots \qquad (1)$$

2. The UOE steel pipe as set forth in claim 1, wherein the amount of Cr is at least 0.01%.

3. The UOE steel pipe as set forth in claim 1 or 2, wherein the amount of C is at most 0.06%.

4. The UOE steel pipe as set forth in any one of claims 1 to 3, wherein the amount of N is at most 0.0050%.

5. The UOE steel pipe as set forth in any one of claims 1 to 4, wherein the amount of Mn is 1.7 to 2.0%.

6. The UOE steel pipe as set forth in any one of claims 1 to 5, wherein the metallurgical structure includes at least 90% by area of bainite.

## Patentansprüche

1. Ein UOE-Stahlrohr, **dadurch gekennzeichnet, dass** es eine Stahlzusammensetzung bestehend aus, in Massenprozent, von C: mindestens 0,03% und höchstens 0,07%, Si: mindestens 0,05% und höchstens 0,50%, Mn: mindestens 1,6% und höchstens 2,2%, P: höchstens 0,020%, S: höchstens 0,003%, Cu: mindestens 0,20% und höchstens 0,60%, Ni: mindestens 0,20% und höchstens 0,80%, Nb: mindestens 0,005% und höchstens 0,030%, Ti: mindestens 0,005% und höchstens 0,030%, N: höchstens 0,0070%, Al: mindestens 0,005% und höchstens 0,060%, Mo: höchstens 0,02%, V: höchstens 0,01%, Cr: höchstens 0,10%, und einen Rest an Fe und Verunreinigungen aufweist, wobei ein in Gleichung (1) vorgegebener Härtbarkeitsindex Pcm höchstens 0,22%, Cu + Cr + Ni mindestens 0,4% und höchstens 1,5%, Nb + Mo + V höchstens 0,05% beträgt, eine Elastizitätsgrenze mindestens 480 MPa beträgt, ein Verhältnis Elastizitätsgrenze-Zugfestigkeit höchstens 85% in der Längsrichtung beträgt, und eine absorbierte Energie nach Charpy in dessen hitzebeeinträchtigten Zone bei -40° C mindestens 40 J beträgt, eine metallurgische Struktur mindestens 80 Flächenprozent Bainit einschließt, und eine Zugfestigkeit in der Längsrichtung höchstens 800 MPa beträgt.

$$\text{Härtbarkeitsindex Pcm} =$$

$$C + (Si/30) + (Ni/60) + (Mo/15) + \{(Cr + Mn + Cu)/20\} + (V/10) + 5B \quad \dots \quad (1)$$

2. Das UOE-Stahlrohr wie in Anspruch 1 dargelegt, wobei die Menge an Cr mindestens 0,01% beträgt.

3. Das UOE-Stahlrohr wie in Anspruch 1 oder 2 dargelegt, wobei die Menge an C höchstens 0,06% beträgt.

4. Das UOE-Stahlrohr wie in einem der Ansprüche 1 bis 3 dargelegt, wobei die Menge an N höchstens 0,0050% beträgt.

5. Das UOE-Stahlrohr wie in einem der Ansprüche 1 bis 4 dargelegt, wobei die Menge an Mn 1,7 bis 2,0% beträgt.

6. Das UOE-Stahlrohr wie in einem der Ansprüche 1 bis 5 dargelegt, wobei die metallurgische Struktur mindestens 90 Flächenprozent Bainit einschließt.

## Revendications

1. Tuyau en acier UOE **caractérisé en ce qu'**il présente une composition d'acier consistant en, en % en masse, C : au moins 0,03 % et au plus 0,07 %, Si : au moins 0,05 % et au plus 0,50 %, Mn : au moins 1,6 % et au plus 2,2 %, P : au plus 0,020 %, S : au plus 0,003 %, Cu : au moins 0,20 % et au plus 0,60 %, Ni : au moins 0,20 % et au plus 0,80 %, Nb : au moins 0,005 % et au plus 0,030 %, Ti : au moins 0,005 % et au plus 0,030 %, N : au plus 0,0070 %, Al : au moins 0,005 % et au plus 0,060 %, Mo : au plus 0,02 %, V : au plus 0,01 %, Cr : au plus 0,10 %, et un reste de Fe et d'impuretés dans lequel, un indice de trempabilité Pcm prescrit par l'équation (1) est d'au plus 0,22 %, Cu + Cr + Ni est d'au moins 0,4 % et d'au plus 1,5 %, Nb + Mo + V est d'au plus 0,05 %, une limite apparente d'élasticité est d'au moins 480 MPa, un rapport limite apparente d'élasticité-résistance à la traction est d'au plus 85 % dans la direction longitudinale, et une énergie absorbée Charpy dans sa zone affectée par la chaleur à -40°C est d'au moins 40 J, une structure métallurgique comprend au moins 80 % en surface de bainite, et une résistance à la traction dans la direction longitudinale est d'au plus 800 MPa.

$$\text{Indice de trempabilité } Pcm = C + (Si/30) + (Ni/60) + (Mo/15) + \{(Cr + Mn + Cu)/20\} + (V/10) + 5B \quad \dots \quad (1)$$

2. Tuyau en acier UOE selon la revendication 1, dans lequel la quantité de Cr est d'au moins 0,01 %.

3. Tuyau en acier UOE selon la revendication 1 ou 2, dans lequel la quantité de C est d'au plus 0,06 %.

4. Tuyau en acier UOE selon l'une quelconque des revendications 1 à 3, dans lequel la quantité de N est d'au plus 0,0050 %.

5. Tuyau en acier UOE selon l'une quelconque des revendications 1 à 4, dans lequel la quantité de Mn est de 1,7 à 2,0 %.

6. Tuyau en acier UOE selon l'une quelconque des revendications 1 à 5, dans lequel la structure métallurgique comprend au moins 90 % en surface de bainite.

**Fig. 1**

**Fig. 2**

**Fig. 3**

**EP 2 264 203 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0918405 A
- JP H11343542 A
- JP 2003293089 A
- JP 2007327136 A
- JP 2007314828 A
- JP H09295067 B
- US 4210445 A
- JP 2000355729 B
- JP H09201688 B
- JP 2004143556 A
- WO 2008007737 A
- US 4219371 A